# EUROPEAN PATENT SPECIFICATION

(11) **EP 0 570 812 B1**
(45) Date of publication and mention of the grant of the patent: **22.01.1997**
(21) Application number: 93107616.0
(22) Date of filing: 11.05.1993
(51) Int. Cl.: C08K 5/14, C08J 3/24

(54) **Process for the preparation of cross-linked olefin polymers**
Verfahren zur Herstellung von vernetzten Olefinpolymeren
Procédé pour la préparation des polymères oléfiniques réticulées

(30) Priority: 19.05.1992 IT MI921204
(43) Date of publication of application: 24.11.1993
(73) Proprietor: ELF ATOCHEM ITALIA S.r.l., 20159 Milano (IT)
(72) Inventor: Merenda, Michele, I-15047 Alessandria (IT); De Franco, Rita, I-27058 Voghera (PV) (IT); Scotti, Carlo, I-27058 Voghera (PV) (IT); Angeloni, Giorgio, I-20021 Bollate (MI) (IT)
(74) Representative: Simeoni, Lucio, Dr.

(56) References cited:
- EP-A- 0 533 090
- US-A- 3 584 059
- US-A- 3 658 914
- US-A- 3 764 628

## Description

The present invention refers to a process for the preparation of crosslinked olefin polymers wherein liquid peroxidic compositions are used which do not show blooming in the compounds of different olefinic polymers.

More particularly the present invention refers to peroxides showing, besides the absence of blooming, an optimal combination of properties as indicated below.

As blooming it is generally intended the migration towards the surface of materials incompatible with the polymer.

In the compound where said phenomenon takes place, it occurs the separation of the peroxide from the granule with consequent dishomogeneity of the same.

From an industrial point of view this must be avoided since in the successive vulcanization not uniform degrees of cross-linking are obtained. For instance in the electric cables this causes a decrease of electrical and mechanical characteristics.

Therefore the blooming causes problems when the product is stocked also for very long periods, also for tens of days only.

It is well known to use peroxides in the cross-linking of polymers, such as f.e. polyethylene, elastomers, as ethylene-propylene (EP) or containing also units deriving from a dienic monomer (EPDM), etc. Peroxides solid at room temperature as PEROXIMON F are known from USP 3.764.628 and Italian Patent No. 651.288. However its use in the vulcanization of polymers is limited in that it is a compound solid at room temperature. In order to obtain a homogenous vulcanized blend it is therefore necessary to maintain PEROXIMON F in the molten state to have a uniform dosage. This operation has the disadvantage in particular due to losses in peroxidic content and to the introduction of impurities.

It is known in the art to overcome these drawbacks by introducing additives having the function to lower the melting point under room temperature.

However, this solution presents the drawback to reduce the efficiency of the cross-linking since the cited additives are inactive substances.

It is known from Italian Patent No. 1.209.130 to prepare liquid compositions of PEROXIMON F by solubilizing the bisperoxide with isopropylcumyl-t-butyl-peroxide.

The composition is liquid at the room temperature of 23°C. This is a drawback since it is desirable to have compositions liquid at a room temperature also of 15°C so permitting a higher use range.

In this way it is avoided the melt the mixture when the temperature is lower than the cited value since this gives rise to the above-mentioned drawbacks as for instance the introduction of impurities in the system which leads to a poor vulcanization in the finished article.

Other liquid peroxidic compositions are known from USP 4.202.790 and No. 4.239.644 where PEROXIMON F is substituted with DCP and is solubilized with cumylisopropyl-cumylperoxide or peroxides of similar general formula. But also these peroxidic compositions present the drawback to be liquid only above 23°C, and so giving the same disadvantages said above.

From USP 4.450.302 liquid peroxidic compositions are known, obtained from PEROXIMON F and DCP (dicumylperoxide) and t.butyl-cumyl-peroxide (PEROXIMON 166) which are liquid at very low temperatures, also lower than 5°C.

Nevertheless they present the drawback to be too volatile at a temperature of 15°C, due to the use of PEROXIMON 166.

The invention relates to a process as defined in Claim 1.

It was desirable to have available liquid peroxides having the optimal balance of the following properties:
- to be liquid at room temperature, also at 15°C;
- to be of low volatility, so to permit that the formulates with inert materials, such as kaolin, calcium carbonate, the elastomeric compounds or polymers in general as polyethylene, can be stocked for long periods without losses in peroxidic content;
- to be compounds where the peroxidic distribution is uniform also after stockage;
- to show absence of blooming.

It has surprisingly been found that by using the peroxide PEROXIMON 180, bis(alpha-t-amyl-peroxy-isopropyl)-benzene of formula: 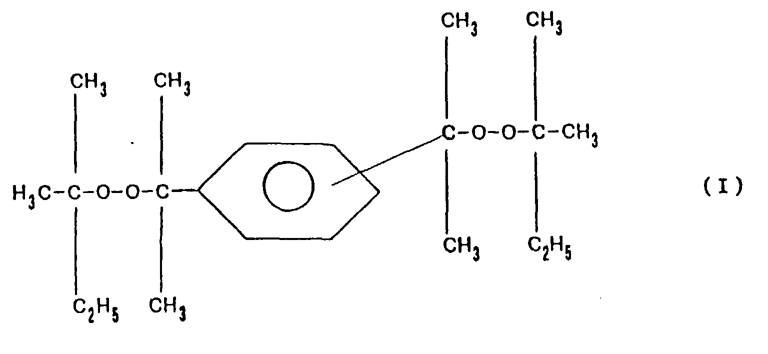 all the cited disadvantages are avoided.

The substituting groups in (I) are in meta and/or para position with respect to the benzenic ring, preferably the meta/para ratio ranges between 1 and 2.0.

The preparation processes of (I) are well known in the art, for example from USP 3.658.914 and Italian Patents Nos. 707.597, 651.288 and 805.543 in addition to the ones indicated above.

A preferred process consists in the alkylation of benzene with an excess of propylene, the preferred ratio being 1:1.5 molar, in the presence of AlCl₃ according to Friedel-Kraft reaction; if desired the mixture containing diisopropylbenzene, prevailingly meta and para, can be rectified to obtain the two isomers separated.

Then an oxidation is carried out by known methods, for example with air, oxygen etc, to obtain the dihydroperoxide of the diisopropylbenzene.

The so prepared dihydroperoxide is extracted by adding an aqueous solution of caustic soda and a subsequent reduction according to known techniques, for instance by sulphides, sulfites, sulphydrates to obtain the dialcohol of formula: 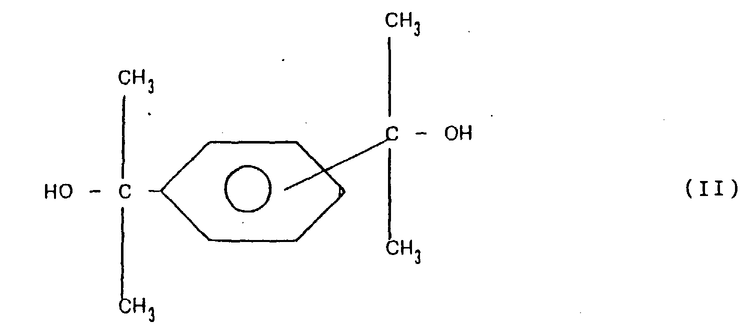 the two substituting groups of the benzenic ring being in meta and/or para position.

The alcohol is separated by centrifugation or filtration of the aqueous phase.

PEROXIMON 180 is then obtained by reaction of the dialcohols (II) with teramylhydroperoxide, in solution of hydrocarbons and/or diteramylperoxide or in aqueous solution, in the presence of one of the known acid catalysts, among them e.g. the sulphuric, the metansulphonic, the paratoluensulphonic so obtaining the known PEROXIMON 180 in meta and/or para form depending on the synthetizing alcohols.

The resulting peroxidic mixture is washed, for instance by an alcaline solution; then it is concentrated by removing the low-boiling compounds, essentially hydrocarburic solvents and peroxidic by-products such as diterbutylperoxide, preferably by distillation under vapour stream or by evaporation of the solvent.

Generally olefinic polymers can be cross-linked by the peroxide of the present invention.

More particularly we can cite middle-, low-, high-density polyethylene, ethylene/vinylacetate copolymers, ethylene/butene-1 copolymers, ethylene/4-methyl-pentene-1 copolymers and propylene/butene-1 copolymers; moreover ethylene/propylene elastomeric polymers or copolymers of EP or EPDM type, the butylic rubber, chlorinated polyethylene and the propylene/butene-1 copolymer.

Also the mixture of two or more olefinic thermoplastic polymers, or two polymers of elastomeric type, or mixtures of at least an elastomeric with a thermoplastic polymer can be successfully cross-linked. The peroxidic compositions can be used not only in the vulcanization of compact articles obtained by extrusion, but also for the manufacture of expanded articles (cross-linked) derived from the same materials, in particular from polystyrene containing self-extinguishing agents (flame-extinguishing agents), furthermore the same compositions can be used as coadjuvants in the degradation by beta-scission of polymers degradable by peroxides, for instance polypropylene or poly-4-methyl-pentene-1, and as radicalic polymerization initiators.

The bisperoxide obtained by said processes can be purified from monoperoxides present as by-products according to the process of USP 3.584.059 which is entirely incorporated by reference in the present description.

The bisperoxide to be used in the process of the present invention has the characteristic to be liquid also at very low temperatures, even at -10°C.

This characteristic associated to the absence of blooming and to the optimal combination of the cited properties makes the peroxides to be used in the process of the present invention particularly useful and flexible for the most various industrial applications.

The compounds are obtained by mixing the polymer in granules, chosen among those indicated above, the peroxides, the antioxidants and, if desired, cross-linking co-agents with inert fillers.

As antioxidants we can cite, for instance: 2.2.4-trimethyl-1.2-dihydroquinoline polymer, 2-mercaptobenzoimidazol, para-benzoquinon-diossine, 4.4-tio-bis-(6-t-butyl-m-cresol), N,N'-m-phenylen-dimaleimide; as cross-linking co-agents: triallylcyanurate, triallylisocyanurate, ethylenglycoldimethacrylate, trimetylolpropane trimetacrylate, 1,2-cis-polybutadiene; as inert charges: carbon black, calcium carbonate, kaolin.

In the examples: RIBLENE CF 2203® means a low-density polyethylene; ANOX HB® means 2.2.4-trimethyl-1.2-dihydroquinoline polymer.

The gaschromatographic analysis indicates the percentages by weight.

The following examples are given only with an illustrative but not limitative purpose of the present invention.

### EXAMPLE 1/a - Meta/para PEROXIMON 180 synthesis.

1 mole of benzol was alkylated with 1.5 moles of propylene, in the presence of AlCl₃ and according to Friedel-Kraft usual techniques, so obtaining a mixture of benzene, cumene, diisopropylbenzenes, tri-isopropylbenzene.
The mixture was rectified to separate the meta-, para-diisopropylbenzene. This mixture was then oxidized by usual techniques with air so obtaining an oxidized mixture containing meta and para diisopropylbenzene, meta and para monohydroperoxide of the diisopropylbenzene, meta and para dihydroperoxide of the diisopropylbenzene. The meta and paradihydroperoxide were extracted from said oxidized mixture by an aqueous solution of soda.
The extract was reduced with sodic sulphydrate, according to usual techniques, by this way all hydroperoxidic groups (-O-O-H) were transformed into alcoholic groups, so obtaining an aqueous suspension of the dialcohol (II), constituted by 35% of the para isomer and by 65% of the meta isomer.
647 g of an eptanic solution containing 1.84 moles of teramylhydroperoxide were introduced in a glass-flask, equipped with stirrer and thermometer, then 174 g of the dialcohol (II) containing 0.53 moles of the meta isomer, 0.28 moles of the para isomer and 0.97 moles of water were added.
Afterwards 331 g of an aqueous solution containing 70% of sulphuric acid were gradually added during 60 minutes, at 5-8°C under nitrogen stream and the solution was kept at 5-8°C for two hours under stirring.
At the end of the reaction the aqueous phase was separated in a separatory funnel and two washings were effected with 500 cm³ each time (at 60°C) of aqueous solution of soda at 10% by weight, then other two washings followed with 200 cm³ each time of deionized water.
After elimination of the heptane under vapour stream and after anhydrification under vacuum at 65°C, 193 g of a peroxidic mixture were obtained having an active oxygen content equal to 6.97% by weight, a purity degree of 81% by weight (as total peroxidic content), a density of 0.933 g/cm³ and a viscosity (at 25°C) of 97 mPa.s.
The halving-points of the mixture (by thermic decomposition) were 107°C (at 10 hours) and 178°C (at 1 minute), the gaschromatographic analysis showed the following composition:
- meta PEROXIMON 180 45% by weight
- para PEROXIMON 180 36% by weight
The rest were by-products.
The product was liquid at -10°C.

### EXAMPLE 1/b - Meta PEROXIMON 180 synthesis.

644 g of an heptanic solution containing 1.84 moles of teramylhydroperoxide were introduced in a glass-flask, equipped with stirrer and thermometer, then 174 g of the dialcohol (II) were added, containing 0.807 moles of the pure meta isomer and 0.98 moles of water.
Then 331 g of an aqueous solution containing 70% by weight of sulphuric acid were gradually added during 60 minutes, at 5-8°C and under nitrogen stream and the solution was kept at 5-8°C for two hours under stirring.
At the end of the reaction the aqueous phase was separated in a separating funnel and two washings were effected, with 500 cm³ each time (at 60°C) of an aqueous solution of soda at 10% by weight, followed by other two washings with 200 cm³ each time of deionized water.
After elimination of the heptane under vapor stream, and after anhydrification under vacuum at 65°C, 178 g of peroxidic mixture were obtained having an active oxygen content of 7.01% by weight, a purity degree of 81% by weight (as total peroxidic content), a density of 0.931 g/cm³ and a viscosity (at 25°C) of 74.47 mPa.s.
The rest were by-products.
The product was liquid at -10°C.

### EXAMPLE 1/c - Para PEROXIMON 180 synthesis.

644 g of an heptanic solution containing 1.84 moles of teramylhydroperoxide were introduced in a glass-flask equipped with stirrer and thermometer, then 174 g of the dialcohol (II) were added, containing 0.807 moles of pure para isomer and 0.98 moles of water.
Then 331 g of an aqueous solution containing 70% by weight of sulphuric acid were gradually added, during 60 minutes, at 5-8°C under nitrogen stream and the solution was kept at 5-8°C for two hours under stirring.
At the end of the reaction the aqueous phase was separated in a separating funnel and two washings were effected, with 500 cm³ each time (at 60°C) of an aqueous solution of soda at 10% by weight, followed by other two washings with 200 cm³ each time of deionized water.
After elimination of the heptane under vapor stream and after anhydrification under vacuum at 65°C, 202 g of a peroxidic mixture were obtained having an active oxygen content equal to 7.02% by weight, a purity degree of 81% by weight (as total peroxidic content), a density of 0.935 g/cm³ and a viscosity (at 25°C) of 109.1 mPa.s.
The rest were by-products.
The product was liquid at -10°C.

### EXAMPLE 1/d - Applicative test of meta-para PEROXIMON 180

100 parts by weight of polyethylene, commercially known as RIBLENE CF 2203® were mixed with 0.5 parts by weight of ANOX HB®.
2.19 parts by weight of the peroxidic mixture of example 1/a were added and the resulting blend was homogenized in a calender.
The product coming from the calender showed the following properties:
a) ODR curve data at 170°C (oscillation arc = 1°)
   MH = 16.93 pounds x inches
   ts10 = 135 seconds
   t90 = 950 seconds
b) "scorching" times at Mooney viscosimeter (135°C):
   t5 = 1034 seconds
   t10 = 1236 seconds

### EXAMPLE 1/e

A)
   5.34 parts of the peroxidic mixture of example 1/a formulated at 40% by weight with 60 parts of calcium carbonate and 0.5 parts by weight of ANOX HB® were mixed with 100 parts by weight of polyethylene used in example 1/d.
   It was calendered as in example 1.
   The product coming from the calender showed the following properties:
   MH = 16.79 pounds x inches
   ts10 = 139 seconds
   t90 = 865 seconds
B)
   A preformed sheet (not cross-linked) of 20 mm x 100 mm having a thickness of 2 mm, obtained from the product after calendering, was stocked at 25°C for 360 hours. Then the sheet was washed by immersion with hexane for 2 minutes to eliminate the possible peroxide bloomed on the surface.
   The sample was then submitted to a cross-linking test under the conditions cited in A).
   MH = 16.33 pounds x inches
   ts10 = 146 seconds
   t90 = 849 seconds
C)
   Example 1/e/B was repeated with the difference that the stockage was continued till 900 hours.
   MH = 16.56 pounds x inches
   ts10 = 147 seconds
   t90 = 860 seconds
   The results show that the peroxide to be used in the process of the present invention does not cause blooming, in fact MH values are practically constant during the time; it was noticed a 2% reduction of the MH value which falls within the limits of the experimental errors.

### EXAMPLE 1/f (comparison test to example 1/e)

Example 1/e/A, B, and C was repeated with the difference that bis(alpha-t-butylperoxyisopropylbenzene) (PEROXIMON F) in an amount of 4.4 g formulated at 40% by weight with 60 parts of calcium carbonate, was used as peroxide.
PEROXIMON F was a meta/para isomeric mixture in a ratio of 1.6.
The results were as follows:
A)
   MH = 16.47 pounds x inches
   ts10 = 193 seconds
   t90 = 1314 seconds
B)
   MH = 14.35 pounds x inches
   ts10 = 181 seconds
   t90 = 1251 seconds
C)
   MH = 14.27 pounds x inches
   ts10 = 185 seconds
   t90 = 1291 seconds
From the results of example 1/f/A,B,C it appears that the peroxide bloomed, in fact in test B the MH value is reduced of 13% with respect to A.

### EXAMPLE 1/g (comparison test to example 1/e and 1/f)

Example 1/f was repeated with the difference that PEROXIMON F was used in the meta form in an amount of 4.4 g. The results were as follows:
A)
   MH = 16.01 pounds x inches
   ts10 = 176 seconds
   t90 = 1385 seconds
B)
   MH = 14.64 pounds x inches
   ts10 = 180 seconds
   t90 = 1419 seconds
C)
   MH = 14.39 pounds x inches
   ts10 = 186 seconds
   t90 = 1427 seconds
Also in this case blooming was present; the MH variation was about 8%.
In example 1/f the blooming was evident with the naked eye: peroxide crystals were evident on the surface of the sample. In example 1/g the blooming showed as a waxy continuous superficial layer.

## Claims

1. Process for the preparation of crosslinked olefin(co)polymers comprising the following consecutive steps:
a) preparing a compound based on olefin polymer and meta and/or para bis-(alpha-t-amylperoxoisopropyl)-benzene as the sole peroxide,
b) storage of the compound for at least 360 hours,
c) cross-linking of the compound.

2. Process according to claim 1, in which the bis-(alpha-t-amyl-peroxyisopropyl)-benzene is in the form of meta/para isomeric mixtures having a meta/para ratio by weight ranging between 1 and 2.0.

3. Process according to claims 1 or 2 in which the olefin polymer is polyethylene.

## Patentansprüche

1. Verfahren zur Herstellung von vernetzten Olefin(co)polymeren, welches folgende aufeinanderfolgende Schritte umfaßt:
a) Herstellung einer Verbindung auf der Basis eines Olefinpolymeren und von meta- und/oder para-Bis-(alpha-t-amylperoxoisopropyl)-benzol als einzigem Peroxid,
b) Lagerung der Verbindung für mindestens 360 Stunden,
c) Vernetzung der Verbindung.

2. Verfahren nach Anspruch 1, bei welchem das Bis-(alpha-t-amyl-peroxyisopropyl)-benzol in Form eines meta/para-Isomergemisches mit einem meta/para-Gewichtsverhältnis zwischen 1 und 2,0 vorliegt.

3. Verfahren nach Anspruch 1 oder 2, bei welchen das Olefinpolymere Polyethylen ist.

## Revendications

1. Procédé de fabrication de (co)polymères oléfiniques réticulés, comprenant les étapes successives suivantes :
(a) la préparation d'un composé à base d'un polymère oléfinique et de méta et/ou para bis-(alpha-t-amylperoxoisopropyl)-benzène en tant que peroxyde unique ;
(b) le stockage du composé pendant au moins 360 heures ;
(c) la réticulation du composé.

2. Procédé selon la revendication 1, dans lequel le bis-(alpha-t-amyl-peroxyisopropyl)-benzène se présente sous la forme de mélanges d'isomères méta/para, ayant un rapport en poids méta/para se situant dans la plage de 1 à 2,0.

3. Procédé selon l'une des revendications 1 ou 2, dans lequel le polymère oléfinique est le polyéthylène.
